# EUROPÄISCHE PATENTSCHRIFT

(11) **EP 3 078 723 B1**
(45) Veröffentlichungstag und Bekanntmachung des Hinweises auf die Patenterteilung: **31.10.2018**
(21) Anmeldenummer: 15162900.3
(22) Anmeldetag: 09.04.2015
(51) Int. Cl.: C09K 21/14, C07F 7/18, C09D 5/18

(54) **ADDUKTE AUS ISOCYANATOALKYLTRIMETHOXYSILANEN UND MIT IHNEN REAKTIVEN FLAMMSCHUTZMITTELN**
ADDUCTS FROM ISOCYANATE OALKYLTRI METHOXYSILANES AND FLAME RETARDANTS THAT REACT WITH THEM
ADDITIFS À BASE D'ISOCYANATOALKYL-TRIMETHOXYSILANES ET MOYENS IGNIFUGES APTES À RÉAGIR À CEUX-CI

(43) Veröffentlichungstag der Anmeldung: 12.10.2016
(73) Patentinhaber: Evonik Degussa GmbH, 45128 Essen (DE)
(72) Erfinder: Stache, Wiebke, Dr., 45699 Herten (DE); Raukamp, Andre, 45770 Marl (DE); Hallack, Markus, 46514 Schermbeck (DE); Lilienthal, Annegret, 46282 Dorsten (DE); Ballauf, Sina, 47167 Duisburg (DE)

(56) Entgegenhaltungen:
- CN-A- 103 304 883
- DE-A1-102012 204 290
- BOCZ KATALIN ET AL: "Flax fibre reinforced PLA/TPS biocomposites flame retarded with multifunctional additive system", POLYMER DEGRADATION AND STABILITY, Bd. 106, 7. November 2013 (2013-11-07), Seiten 63-73, XP028854219, ISSN: 0141-3910, DOI: 10.1016/J.POLYMDEGRADSTAB.2013.10.025

## Beschreibung

Die vorliegende Erfindung betrifft Addukte aus Isocyanatoalkyltrimethoxysilanen und mit ihnen reaktiven Flammschutzmitteln, Verfahren zur ihrer Herstellung, sie enthaltende Zusammensetzungen und ihre Verwendung.

Bindemittel mit Trialkoxysilan-Funktionalität finden vielfältige Anwendung z.B. in kratzfesten Beschichtungsmitteln (WO 2013/189882 A2), in Schmelzklebstoffen (US 8,535,798 B2) und Dichtmassen (DE 10 2012 203273 A1), da sich entsprechende Bindemittel aufgrund der in ihnen enthaltenen Trialkoxysilan-Strukturelemente durch einen hohen Vernetzungsgrad auszeichnen.

Für viele Anwendungen, insbesondere im öffentlichen Sektor, ist ein ausreichender Flammschutz nicht nur der für die jeweilige Anwendung eingesetzten Substrate, sondern auch ihrer Oberflächenbeschichtungen, Klebverbindungen und Dichtmassen wünschenswert. Um eine Verbrennung zu verlangsamen oder gar vollständig zu unterbinden, werden entsprechenden Formulierungen oft mit den einzelnen Formulierungsbestandteilen nicht reaktive Flammschutzmittel zugesetzt. Als solche kommen z.B. mineralische Stoffe, wie beispielsweise Aluminiumhydroxid oder Antimonoxid, und (insbesondere halogen- oder phosphorhaltige) organische Flammschutzmittel zum Einsatz. Additiv hinzugesetzte Flammschutzmittel haben jedoch den Nachteil, dass sie aus den aufgebrachten Oberflächenbeschichtungen bzw. Klebverbindungen heraus migrieren können und dadurch unerwünschte Emission hervorgerufen und die flammhemmende Wirkung reduziert wird.

Nachteilig ist weiterhin die nicht vorhandene flammhemmende Wirkung üblicher auf Trialkoxysilanen basierender Bindemittel.

Marosi et al. (Polymer Degradation and Stability 106 (2014) 63-73) beschreiben ein phosphorhaltiges Triethoxysilan, welches für die Herstellung flammgeschützter Bioverbundwerkstoffe eingesetzt wird. Nachteilig ist jedoch, dass die mit dem beschriebenen Triethoxysilan benetzten Flachsfasern zur Aushärtung lange Zeit auf hohe Temperaturen erhitzt werden müssen. Marosi et al. nennt selbst Temperaturen von 130 °C und Reaktionszeiten von 8 h. Für eine Verarbeitung bei niedrigen Temperaturen sind entsprechende flammhemmende Addukte somit nicht geeignet. Nachteilig ist weiterhin, dass bei niedrigen Temperaturen ausgehärtete Beschichtungen, insbesondere Klarlacke, die entsprechende phosporhaltige Triethoxysilanverbindungen aufweisen, stark klebrig sind.

CN 103 304 883 A offenbart eine flammhemmend ausgestattete Ethylen-Vinylacetat-Copolymer-Mischung, die eine heterocyclische Organophsphorverbindung, bei der es sich um 9,10-Dihydro-9-oxa-10-phosphaphenanthrene 10-oxid handeln kann, umgesetzt mit einer Organosiliciumverbindung, aufweist.
Es ist somit die sich stellende Aufgabe der vorliegenden Erfindung, die Nachteile des Standes der Technik zu vermeiden. Insbesondere ist es die Aufgabe der vorliegenden Erfindung, ein bei niedrigen Temperaturen verarbeitbares flammhemmendes Alkoxysilan bereitzustellen, das zur Erzeugung nicht-klebriger Beschichtungen eingesetzt werden kann.

Diese sich vorliegend stellende Aufgabe wird vorliegend gelöst durch das erfindungsgemäße Addukt aus mindestens einem Isocyanatoalkyltrimethoxysilan und mindestens einem mit dem Isocyanatoalkyltrimethoxysilan reaktiven Flammschutzmittel, wobei das reaktive Flammschutzmittel ein Phosphonat oder Phosphinoxid mit im Mittel 1,5 bis 3,0 zerewitinoffaktiven Wasserstoffatomen und einem zahlenmittleren Molekulargewicht Mₙ von 60 bis 10000 Dalton (bestimmt mittels Massenspektrometrie) ist. Das erfindungsgemäße Addukt kann somit als Umsetzungsprodukt eines oder mehrerer Isocyanatoalkyltrimethoxysilane mit einem oder mehreren mit dem Isocyanatoalkyltrimethoxysilan reaktiven Flammschutzmitteln verstanden werden. Bevorzugt handelt es sich bei dem Addukt um das Umsetzungsprodukt eines Isocyanatoalkyltrimethoxysilans mit einem mit diesem Isocyanatoalkyltrimethoxysilan reaktiven Flammschutzmittel.

Isocyanatoalkyltrimethoxysilane und ihre Synthese gehören zum Stand der Technik. Eine besonders gute flammhemmende Wirkung und/oder eine Anwendbarkeit bei besonders niedrigen Temperaturen über kurze Reaktionszeiten kann mit Isocyanatoalkyltrimethoxysilanen ausgewählt aus der Gruppe bestehend aus Isocyanatomethyltrimethoxysilan, 2-Isocyanatoethyltrimethoxysilan, 3-Isocyanato-n-propyltrimethoxysilan und 4-Isocyanato-n-butyltrimethoxysilan erzielt werden. Ganz besonders gute Ergebnisse können mit 3-Isocyanato-n-propyltrimethoxysilan erzielt werden.

Unter Flammschutzmitteln werden chemische Substanzen verstanden, die die Entflammbarkeit von Materialien herabsetzen. Bevorzugte Flammschutzmittel sind halogenfrei. Unter solchen werden Phosphor, Stickstoff, Aluminium und/oder Magnesium enthaltende Flammschutzmittel verstanden. Besonders bevorzugt als Flammschutzmittel sind phosphor-organische Verbindungen.

Unter "reaktiven" Flammschutzmitteln können solche verstanden werden, die mit mindestens einem der jeweiligen Zusammensetzungsbestandteile reaktiv sind und somit aufgrund einer erfolgten Anbindung in das jeweilige Beschichtungsmittel, den Klebstoff bzw. die Dichtmasse eingebaut werden können. Vorliegend erfolgt die Anbindung des Flammschutzmittels über die Ausbildung einer chemischen Bindung zwischen dem Isocyanatoalkyltrimethoxysilan und dem reaktiven Flammschutzmittel. Aufgrund des erfolgten Einbaus kann eine unerwünschte Emission und somit ein Verlust der flammhemmenden Wirkung weitestgehend vermieden werden. In EP 1 544 227 A1, EP 1 710 264 B1 und US 2012/0296013 A1 werden z.B. für den Einbau in EpoxyHarzen geeignete Phosphor-organische Flammschutzmittel beschrieben.

Die für die Adduktbildung mit Isocyanatoalkyltrimethoxysilan geeigneten phosphor-organischen Flammschutzmittel weisen Hydroxyl-, Amino- und/oder Thiolreste auf, welche mit den freien Isocyanatgruppen des Isocyanatoalkyltrimethoxysilans unter Addition reagieren können

Beispiele für einbaubare phosphorhaltige Flammschutzmittel sind 3-(Hydroxyphenyl-phosphinyl)propansäure und deren Derivate. Erfindungsgemäß eingesetzt werden Phosphonate oder Phosphinoxide mit im Mittel 1,5 bis 3,0 zerewitinoffaktiven Wasserstoffatomen und einem zahlenmittleren Molekulargewicht Mₙ von 60 bis 10000 Dalton (bestimmt mittels Massenspektrometrie). Unter zerewittinoffaktiven Wasserstoffatom- enthaltenden Verbindungen sind weiter bevorzugt Hydroxyl-, Amino- und/oder Thiolreste aufweisende Verbindungen zu verstehen.

Bevorzugte Verbindungen weisen die folgende Strukturformel 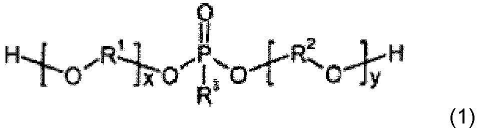 mit
R¹, R² = verzweigter oder unverzweigter Alkylenrest mit 1 bis 24 C-Atomen, substituierter oder nicht-substituierter Arylenrest mit 6 bis 20 C-Atomen, substituierter oder nicht-substituierter Aralkylenrest mit 6 bis 30 C-Atomen, substituierter oder nicht-substituierter Alkarylenrest mit 6 bis 30 C-Atomen, wobei R¹ und R² gleich oder verschieden sein können,
R³ = H, verzweigter oder unverzweigter Alkylrest mit 1 bis 24 C-Atomen, substituierter oder nicht-substituierter Arylrest mit 6 bis 20 C-Atomen, substituierter oder nicht-substituierter Aralkylrest mit 6 bis 30 C-Atomen, substituierter oder nicht-substituierter Alkarylrest mit 6 bis 30 C-Atomen, und
x, y = 1 bis 50 auf.

Ebenfalls bevorzugte Verbindungen weisen die folgende Strukturformel 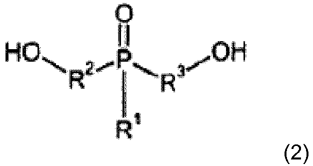 mit
R¹ = H, verzweigter oder unverzweigter Alkylrest mit 1 bis 24 C-Atomen, substituierter oder nicht-substituierter Arylrest mit 6 bis 20 C-Atomen, substituierter oder nicht-substituierter Aralkylrest mit 6 bis 30 C-Atomen, substituierter oder nicht-substituierter Alkarylrest mit 6 bis 30 C-Atomen,
R², R³ = verzweigter oder unverzweigter Alkylenrest mit 1 bis 24 C-Atomen, substituierter oder nicht-substituierter Arylenrest mit 6 bis 20 C-Atomen, substituierter oder nicht-substituierter Aralkylenrest mit 6 bis 30 C-Atomen, substituierter oder nicht-substituierter Alkarylenrest mit 6 bis 30 C-Atomen, wobei die Alkyl- oder Arylreste auch Hydroxyl-, Amino- und/oder Thiolgruppen-substituiert und die Reste R² und R³ gleich oder verschieden sein können, auf.

Besonders bevorzugt, da so Systeme mit besonders guten Licht- und Wetterbeständigkeiten erhalten werden können, handelt es sich bei den Resten R¹, R² und R³ der Formel (1) um verzweigte oder unverzweigte Alkyl- bzw. Alkylenreste mit 1 bis 24 C-Atomen, wobei die Reste R¹ und R² gleich oder verschieden sein können.

Besonders bevorzugt, da so Systeme mit besonders guten Licht- und Wetterbeständigkeiten erhalten werden können, handelt es sich bei den Resten R¹, R² und R³ der Formel (2) um verzweigte oder unverzweigte Alkyl- bzw. Alkylenreste mit 1 bis 24 C-Atomen, wobei die Alkylreste auch Hydroxyl-, Amino- und/oder Thiolgruppen-substituiert und die Reste R² und R³ gleich oder verschieden sein können.

Weitere bevorzugte einbaubare, phosphor-organische Flammschutzmittel sind Phosphonsäureester, insbesondere Diethyl-N,N-bis-(2-hydroxyethyl)-aminomethylphosphonat.

Vorteilhaft einsetzbare Handelsprodukte sind z.B. die Produkte Exolit OP550 (Fa. Clariant, oligomeres Organophosphat,), Exolit OP 560 (Fa. Clariant, entsprechend Strukturformel (1) mit [-OR¹-]ₓ = [-R¹O-]_{y} = Oligoethylenglykol und R³ = CH₃), Aflammit TL1231 (Fa. Thor, entsprechend Strukturformel (2) mit R¹ = CH₂OH und R² = R³ = CH₂).

Ganz besonders bevorzugt ist die mindestens eine phosphororganische Verbindung Organophosphat der Formel (3) 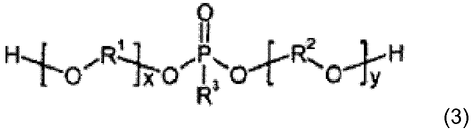 mit
R¹ = R² = CH₂,
R³ = CH₃
x = 0-4 und
y = 0-4.
Weiter bevorzugt beträgt x oder y mindestens den Wert 2, d.h. die obige Formel gilt mit der Maßgabe, dass x oder y = 2 - 4.

In Abhängigkeit der gewählten Stöchiometrie der beider Reaktionspartner bei der Adduktbildung kann das aus der Umsetzung von mindestens einem, bevorzugt einem, Isocyanatoalkyltrialkoxysilan mit mindestens einem, bevorzugt einem, reaktivem Flammschutzmittel noch freie Hydroxyl- oder Isocyanatgruppen enthalten. Bevorzugt ist es aber im Wesentlichen frei von Hydroxyl- oder Isocyanatgruppen. Es handelt sich somit bevorzugt um ein 1:1-Addukt aus Isocyanatoalkyltrimethoxysilan und Flammschutzmittel.

Gegenstand der vorliegenden Erfindung ist weiterhin ein Verfahren zur Herstellung der erfindungsgemäßen Addukte, bei dem mindestens ein, bevorzugt ein, Isocyanatoalkyltrimethoxysilan mit mindestens einem, bevorzugt einem, mit dem Isocyanatoalkyltrimethoxysilan reaktiven Flammschutzmittel umgesetzt wird, wobei das reaktive Flammschutzmittel ein Phosphonat oder Phosphinoxid mit im Mittel 1,5 bis 3,0 zerewitinoffaktiven Wasserstoffatomen und einem zahlenmittleren Molekulargewicht Mₙ von 60 bis 10000 Dalton ist.

Die bei dem erfindungsgemäßen Verfahren einsetzbaren bevorzugten Isocyanatoalkyltrimethoxysilane und mit ihnen reaktiven Flammschutzmittel sind dieselben wie zuvor für das Addukt selbst definiert.

Die Umsetzung von Isocyanatoalkyltrimethoxysilan und damit reaktivem Flammschutzmittel erfolgt dabei bevorzugt in einem Verhältnis von NCO-reaktiven Resten des bzw. der Flammschutzmittel, insbesondere von OH-, NH₂- oder SH-Resten, zu NCO-Resten von Isocyanatoalkyltrimethoxysilans von 0,8:1 bis 1,2:1, bevorzugt 0,9:1 bis 1,1:1, wobei die stöchiometrische Umsetzung (d.h. im Verhältnis 1:1) besonders bevorzugt ist. Somit erfolgt bevorzugt eine vollständige Umsetzung aller NCO-reaktiven Gruppen der reaktiven Flammschutzmittel mit den NCO-Gruppen der Isocyanatoalkyltri methoxysilane.

Bei der genannten Umsetzung reagieren die NCO-Reste der Isocyanatoalkyltrialkoxysilane mit den NCO-reaktiven Resten der Flammschutzmittel. Bevorzugt werden OH-, NH₂- oder SH-Reste der Flammschutzmittel unter Ausbildung von -NH-CO-O-, -NH-CO-NH- oder -NH-CO-S-Einheiten, die die Isocyanatoalkyltrimethoxysilane mit den Flammschutzmitteln verknüpfen, umgesetzt.

Die Umsetzung kann weiterhin unter Verwendung üblicher Hilfs- und Zusatzmittel wie z.B. Lösungsmittel und Katalysatoren erfolgen.

Bevorzugt wird die Umsetzung zum erfindungsgemäßen Addukt lösemittelfrei oder unter Verwendung von nicht-protischen Lösemitteln durchgeführt, wobei die Umsetzung diskontinuierlich oder kontinuierlich erfolgen kann. Die Reaktion kann bei Raumtemperatur, das heißt bei Temperaturen im Bereich von 20 - 25 °C, geführt werden, bevorzugt werden jedoch höhere Temperaturen im Bereich 30 - 150 °C, insbesondere im Bereich von 50 - 150 °C verwendet. Die Reaktion wird bevorzugt unter Ausschluss von Wasser durchgeführt.

Zur Beschleunigung der Reaktion können vorteilhaft Katalysatoren, insbesondere tertiäre und aromatische Amine (insbesondere Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin) eingesetzt werden Ebenfalls vorzugsweise einsetzbare Katalysatoren sind Metallsalze (insbesondere Eisen(II)-chlorid, Aluminiumtri-(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutylzinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Molybdänglykolat). Werden Katalysatoren eingesetzt, werden diese bevorzugt in einer Konzentration im Bereich von 0,001 bis 2 Gew.-%, vorzugsweise im Bereich von 0,005 bis 0,5 Gew.-%, bezogen auf das Gesamtgewicht der Reaktionspartner, eingesetzt.

Gegenstand der vorliegenden Erfindung sind weiterhin auch Zusammensetzungen umfassend mindestens ein erfindungsgemäßes Addukt. Bevorzugt handelt es sich bei den erfindungsgemäßen Zusammensetzungen um Beschichtungszusammensetzungen. Dabei sind unter Beschichtungszusammensetzungen insbesondere Beschichtungsmittel (wie z.B. Lackzusammensetzungen), Klebstoffzusammensetzungen und Dichtmassen zu verstehen.

Die erfindungsgemäßen Zusammensetzungen können neben den erfindungsgemäßen Zusammensetzungen weitere Bestandteile aufweisen. Bevorzugt beträgt der Anteil an Addukt dabei jeweils in Anteilen von 15 - 99 Gew.-%, bevorzugt 25 - 95 Gew.-%, ganz besonders bevorzugt 55 - 95 Gew.%, bezogen auf die Gesamtmasse aller anwesenden Zusammensetzungsbestandteile.

So können die erfindungsgemäßen Zusammensetzungen zur Erhöhung der flammhemmenden Wirkung auch nicht mit den anderen Zusammensetzungsbestandteilen reaktive, d.h. additive Flammschutzmittel aufweisen. Sind solche anwesend, liegen sie bevorzugt in Anteilen von 0,01 - 85 Gew.-%, bevorzugt 0,01 - 45 Gew.-%, bezogen auf die Gesamtmasse aller anwesenden Zusammensetzungsbestandteile vor.

Bevorzugt sind nicht einbaubare Phosphor-organische Flammschutzmittel. Beispiele für nicht einbaubare Phosphor-organische Flammschutzmittel sind Ethylendiamin-polyphosphat und Phosphorsäure- und Phosphonsäureester, wie zum Beispiel Triphenyl-phosphat, Tricresylphosphat, Alkylphenylphosphate, Diphenylkresylphosphat.

Bevorzugte nicht einbaubare phosphor-organische Flammschutzmittel sind Hydrocarbyl-(dihydrocarbylphosphate) der allgemeinen Formel 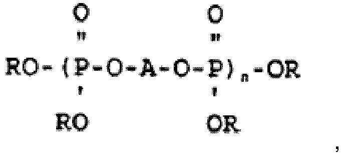 wobei R bevorzugt eine Arylgruppe (zum Beispiel Phenyl, Kresyl), A eine verbindende Gruppe wie Arylen (zum Beispiel Phenylen), Biarylen (zum Beispiel Biphenyl), zwei Arylengruppen, welche durch eine weitere Gruppe wie -CH₂-, -C(CH₃)₂-, -SO₂- oder -CO- verbunden sind, oder Alkylen (zum Beispiel Neopentyl) ist und n zwischen 1 und 10 liegt. Derartige Verbindungen können großtechnisch aus Phosphorsäure oder Phosphoroxytrichlorid und Diphenolen wie Resorcin oder Bisphenol A (welche dann die Gruppe A bilden) und Monophenolen wie Phenol und Kresol (welche dann die Gruppe R bilden) hergestellt werden. Bevorzugt werden Phosphorsäure-1,3-phenylen-tetraphenylester und Phosphorsäure-1,3-Phenylen-tetraphenylester-Oligomere sowie Bisphenol A bis-(diphenylphosphate) und dessen Oligomere. Bevorzugt werden auch Phosphor- oder Phosphonsäurederivate, die bei Hydrolyse weder Phenol noch Kresol freisetzen, Beispiele hierfür sind Trixylylphosphat, butylierte Phenylphosphate und Phosphorsäure-1,3-Phenylen-tetraxylenylester.

Insbesondere im Falle von Beschichtungszusammensetzungen kann die erfindungsgemäße Zusammensetzung neben den erfindungsgemäßen Addukten Lack-übliche Komponenten L aufweisen.

Die Lack-üblichen Komponenten L in den erfindungsgemäßen Zusammensetzungen liegen dabei bevorzugt in Anteilen von 0,1 % - 99 Gew.-%, bevorzugt von 5 % - 97 Gew.-%, besonders bevorzugt von 10 - 60 Gew.-%, bezogen auf die Gesamtmasse der Zusammensetzung vor.

Unter Lack-üblichen Komponenten L werden alle in der Literatur beschriebenen Bestandteile eines Lackes wie dessen Bindemittel und Additive (z.B. Katalysatoren, Stabilisatoren, Photoinitiatoren, Lichtschutzmittel, Füllstoffe, Pigmente, Verlaufsmittel oder Rheologiehilfsmittel, wie z. B. sog. "sag control agents", Mikrogele oder pyrogenes Siliciumdioxid, Lösemittel, etc.) verstanden (siehe Lehrbuch der Lacktechnologie, T. Brock, M. Groteklas, P. Mischke, Vincentz Verlag 2000, Hannover*).*

Die erfindungsgemäßen Zusammensetzungen weisen bevorzugt mindestens einen Katalysator in Anteilen von 0,01 - 4 Gew.-% bezogen auf die Gesamtmasse der Zusammensetzung auf.

Katalysatoren werden dabei zur Erzielung einer ausreichenden Aushärtungsgeschwindigkeit eingesetzt. Bevorzugte Katalysatoren sind insbesondere Lewis-Säuren, Metall- oder Übergangsmetallchelate, -Salze oder -Partikel, beispielsweise auf Basis von Titan-, Aluminium-, Zinn- oder Zirkoniumkomplexen, Sulfonsäuren in freier aber auch neutralisierter oder adduktierter Form, wie sie beispielsweise in DE 2356768 beschrieben sind, Phosphorsäure oder phosphorige Säuren und deren Derivate (WO 2008/074491 A1, Seite 18, Zeilen 1 -17), hoch siedende Säuren, Guanidine (z.B. Tetramethylguanidin), Amidine (z.B. DBU), quarternäre Ammoniumcarboxylate oder auch Kombinationen der genannten Verbindungen.

Bevorzugt werden Übergangsmetallchelate oder -salze, hoch siedende Säuren, quarternäre Ammoniumcarboxylate oder Kombinationen der genannten Verbindungen eingesetzt.

Besonders bevorzugt ist der Katalysator ausgewählt aus der Gruppe der organischen Carbonsäuren mit einem Schmelzpunkt oberhalb von 60 °C und/oder der Gruppe der Tetraalkylammoniumcarboxylate.

Geeignete organische Carbonsäuren mit einem Schmelzpunkt oberhalb von 60 °C (bei Normaldruck) sind bei Raumtemperatur nicht flüchtige Verbindungen. Beispiele vorteilhaft einzusetzender Carbonsäuren sind Salicylsäure, Benzoesäure, Citronensäure, Isophthalsäure, Phthalsäure, Terephthalsäure und/oder Trimellithsäure. Bevorzugt werden im Rahmen der vorliegenden Erfindung Salicylsäure und Benzoesäure verwendet.

Beispiele für Katalysatoren der Gruppe der Tetraalkylammoniumcarboxylate sind Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und/oder Tetrabutylammoniumbenzoat. Die genannten Tetraalkylammoniumcarboxylate können allein oder in Mischungen zugesetzt werden. Bevorzugt werden Tetraethylammoniumbenzoat und/oder Tetrabutylammoniumbenzoat eingesetzt.

Der Katalysator in der erfindungsgemäßen Zusammensetzung kann allein aus den oben genannten bevorzugten Alternativen Carbonsäure oder Tetraalkylammoniumcarboxylat bestehen, es können aber auch beliebige Mischungen der Katalysatoren Carbonsäure oder Tetraalkylammoniumcarboxylat eingesetzt werden. Derartige Mischungen weisen insbesondere ein Verhältnis von 9 : 1 bis 1 : 9 (m/m) auf. Vorzugsweise beträgt der Anteil an Carbonsäure und/oder Tetraalkylammoniumcarboxylat bis zu 4 Gew.-%, bezogen auf die Gesamtmasse aller Zusammensetzungsbestandteile, vorzugsweise 0,1 bis 4 Gew.-%.

Bei dem in den erfindungsgemäßen Zusammensetzungen eingesetzten Katalysator kann es sich neben den obengenannten Carbonsäuren und/oder Tetraalkylammoniumcarboxylaten bevorzugt auch um Zinn-haltige Verbindungen, bevorzugt um Organozinnverbindungen, handeln. Besonders bevorzugt handelt es sich um mindestens eine organische Zinnverbindung der Formel R¹₄₋ₐSnXₐ, wobei a 1, 2 oder 3 ist, R¹ unabhängig ausgewählt wird aus der Gruppe bestehend aus linearen oder verzweigten, gegebenenfalls substituierten, C₁-C₃₀-Alkylgruppen-, C₅-C₁₄-Cycloalkylgruppen oder C₆-C₁₄-Arylgruppen, Triorganylsilyl- sowie C₁-C₃₀-Diorganylalkoxysilyl-Gruppen, und X ausgewählt wird aus der Gruppe bestehend aus Halogen, -OR², -OC(O)R³, -OH, -SR⁴, -NR⁵₂,-NHR⁶, -OSiR⁷₃, -OSi(OR⁸)₃, worin die Substituenten R² bis R⁸ jeweils unabhängig voneinander ausgewählt werden aus gegebenenfalls substituierten C₁-C₈-Alkyl-, C₆-C₁₄-Aryl- und/oder C₂-C₈-Alkenylgruppen.

Die in der Definition der vorstehend genannten organischen Zinnverbindungen erwähnten linearen oder verzweigten, gegebenenfalls substituierten, C₁-C₃₀-Alkylgruppen schließen solche mit 1 bis 30 Kohlenstoffatomen ein, wie zum Beispiel Methyl, Ethyl, Chlorethyl, n-Propyl, iso-Propyl, n-Butyl, iso-Butyl, Pentyl, Hexyl, Heptyl, Ethylhexyl, Octyl, Decyl, Undecyl, Dodecyl, Tridecyl, etc. Bevorzugt ist Butyl, Hexyl oder Octyl.

Die in der Definition der vorstehend genannten organischen Zinnverbindungen erwähnten C₅-C₁₄-Cycloalkylgruppen schließen mono-oder polycyclische Alkylgruppen ein, wie zum Beispiel Cyclopentyl, Cyclohexyl, Cyclohexylethyl Cyclooctyl, Decalinyl, Hydrindanyl, Bicyclo[2.2.1]heptanyl, Bicyclo[2.2.2]octanyl, Bicyclo[4.2.3]nonyl.

C₆-C₁₄-Arylgruppen umfassen z. B. Phenyl-, Naphthenyl- oder Fluorenylgruppen.

Bevorzugte Beispiele als Katalysatoren geeigneter Zinn-haltiger Verbindungen sind Alkylzinnchloride, bevorzugt Di-n-butylzinndichlorid und Di-n-octylzinndichlorid, Alkylzinnoxide, bevorzugt Di-n-butylzinnoxid und Di-n-octylzinnoxid, Dibutylzinncarboxylate, bevorzugt Di-n-butylzinndiacetat, Di-n-butylzinndilaurat, Di-n-butylzinnmaleat, Di-n-butylzinn-bis-2-ethylhexanoat und Di-n-butylzinndineodecanoat, Dioctylzinncarboxylate, bevorzugt Di-n-octylzinndiacetat, Di-n-octylzinndilaurat, Di-n-octyl-zinnmaleat, Di-n-octylzinn-bis-2-ethylhexanoat und Di-n-octylzinndineodecanoat, sowie Dialkylzinnkomplexe, bevorzugt Di-n-butylzinndiacetylacetonat.

In den erfindungsgemäßen Mischungen können weiterhin besonders bevorzugt Zinn-Ketonate eingesetzt werden, da diese den Vorteil haben, sich in den erfindungsgemäßen Zusammensetzungen leicht (sofort oder nach geringem Erwärmen) zu lösen.

Die Menge der Zinn-haltigen Katalysatoren in der erfindungsgemäßen Zusammensetzung beträgt bevorzugt 0,01 bis 1,0 Gew.-%, insbesondere bevorzugt 0,1 bis 1 Gew.-%, jeweils bezogen auf die Gesamtmasse aller Zusammensetzungsbestandteile.

Weitere Beispiele für bevorzugt einsetzbare Katalysatoren für die erfindungsgemäßen Zusammensetzungen sind die für die Herstellung der erfindungsgemäßen Addukte geeigneten Katalysatoren.

Die erfindungsgemäßen Zusammensetzungen können bevorzugt als weitere Lack-übliche Komponenten Co-Bindemittel aufweisen. Als Co-Bindemittel eignen sich grundsätzlich alle dem Fachmann bekannten Arten von Bindemitteln, beispielsweise auch thermoplastische, das heißt nicht vernetzbare Bindemittel, die üblicherweise ein mittleres Molekulargewicht > 10000 g/mol aufweisen. Bevorzugt werden jedoch Bindemittel, die über reaktive funktionelle Gruppen mit aciden Wasserstoffatomen verfügen, eingesetzt. Geeignete Bindemittel der genannten Art weisen beispielsweise mindestens eine, bevorzugt jedoch zwei oder mehr Hydroxylgruppen auf.

Sind Co-Bindemittel anwesend, liegen diese bevorzugt in der Zusammensetzung in Anteilen von 0,1 - 30 Gew.-% bezogen auf die Gesamtmasse der Zusammensetzung vor. Als Co-Bindemittel mit funktionellen Gruppen können bevorzugt Hydroxylgruppen-haltige Polymere, insbesondere Hydroxylgruppen-haltige Polyester, Polyether, Poly(meth)acrylate, Polycarbonate und Polyurethane mit einer OH-Zahl von 20 bis 500 mg KOH/g und einer mittleren Molmasse von 250 bis 6000 g/Mol eingesetzt werden. Besonders bevorzugt werden im Rahmen der vorliegenden Erfindung Hydroxylgruppen-haltige Polyester oder Poly(meth)acrylate mit einer OH-Zahl von 20 bis 150 mg KOH/g und einem mittleren Molekulargewicht von 500 bis 6000 g/mol als Bindemittelkomponenten eingesetzt. Unter Poly(meth)acrylaten sind dabei sowohl Polyacrylate als auch Polymethacrylate zu verstehen. Die Hydroxylzahl (OHZ) wird bestimmt nach DIN 53240-2. Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt. Das Molekulargewicht wird bestimmt mittels Gelpermeationschromatographie (GPC). Die Charakterisierung der Proben erfolgte in Tetrahydrofuran als Eluent nach DIN 55672-1.

Als hydroxylgruppenhaltige (Meth)acryl-Copolymerisate können Harze mit einer Monomerzusammensetzung, wie sie z. B. in WO 93/15849 A1 (S. 8, Zeile 25 bis S. 10, Zeile 5), oder auch in DE 195 29124 beschrieben sind, verwendet werden. Dabei sollte die durch anteilige Verwendung von (Meth)acrylsäure als Monomer einzustellende Säurezahl des (Meth)acryl-Copolymerisates 0 - 30, vorzugsweise 3 - 15 mg KOH/g betragen. Das zahlenmittlere Molgewicht (ermittelt durch Gelpermeationschromatographie gegen einen Polystyrolstandard) des (Meth)acryl-Copolymerisates beträgt vorzugsweise 2000 - 20000 g/mol, die Glasübergangstemperatur beträgt vorzugsweise -40 °C bis +60 °C. Der durch anteilige Verwendung von Hydroxyalkyl(meth)acrylaten einzustellende Hydroxylgehalt der erfindungsgemäß zu verwendenden (Meth)acryl-Copolymerisate beträgt vorzugsweise 70 - 250 mg KOH/g, besonders bevorzugt 90 - 190 mg KOH/g.

Erfindungsgemäß geeignete Polyesterpolyole sind Harze mit einer Monomerzusammensetzung aus Di- und Polycarbonsäuren und Di- und Polyolen, wie sie z. B. in Stoye/Freitag, Lackharze, C. Hanser Verlag, 1996, S. 49 oder auch in WO 93/15849 beschrieben sind. Als Polyesterpolyole können auch Polyadditionsprodukte von Caprolacton an niedermolekulare Di- und Triole, wie sie z. B. unter der Bezeichnung CAPA (Perstorp) erhältlich sind, eingesetzt werden. Das rechnerisch bestimmte zahlenmittlere Molgewicht beträgt vorzugsweise 500 - 5000 g/mol, besonders bevorzugt 800 - 3000 g/mol, die mittlere Funktionalität beträgt vorzugsweise 2,0 - 4,0, bevorzugt 2,0 - 3,5.

Als erfindungsgemäß zu verwendende urethan- und estergruppenhaltige Polyole kommen prinzipiell auch solche zum Einsatz, wie sie in EP 140 186 A2 beschrieben sind. Bevorzugt werden urethan- und estergruppenhaltige Polyole, zu deren Herstellung HDI, IPDI, Trimethylhexamethylendiisocyanat (TMDI) oder H₁₂-MDI verwendet werden, eingesetzt. Das zahlenmittlere Molgewicht beträgt vorzugsweise 500 - 2000 g/mol, die mittlere Funktionalität liegt insbesondere im Bereich von 2,0 - 3,5.

Auch Alkoxysilan-funktionelle Bindemittel eignen sich bevorzugt als Co-Bindemittel in den erfindungsgemäßen Zusammensetzungen. Besonders bevorzugt sind Trialkoxysilan-haltige Bindemittel. Derartige Bindemittel können gewonnen werden durch Copolymerisation von Acrylat- oder Methacrylat-Monomeren mit acryl- oder methacryl-funktionellen Alkyl-Trialkoxysilan-Derivaten (z. B. Dynasylan® MEMO der Evonik Industries AG), wie sie zum Beispiel in WO 92/11328 A1 beschrieben sind. Ein alternativer Syntheseweg besteht in der Derivatisierung von hydroxylgruppenhaltigen Polyethern, Polyestern, Polycarbonatdiolen oder Polyacrylaten mit Isocyanatoalkylltrialkoxysilan, wie er beispielsweise in WO 2008/131715 A1 in den Beispielen 3 und 4 beschrieben ist. Bevorzugt wird dieser Syntheseweg mit Isocyanatopropyltrimethoxysilan oder Isocyanatopropyltriethoxysilan durchgeführt.

Die erfindungsgemäßen Zusammensetzungen können ganz besonders bevorzugt Trialkoxysilanfunktionelle Aminosilane als Co-Bindemittel aufweisen. Bevorzugt handelt es sich bei entsprechenden Aminosilanen um solche der allgemeinen Formel AₘSiYₙ, worin A eine substituierte oder unsubstituierte Aminoalkylgruppe, eine substituierte oder unsubstituierte Diaminodialkylgruppe oder eine substituierte oder unsubstituierte Triaminotrialkylgruppe darstellt, die Gruppen Y gleich oder verschieden sind, wobei Y für OH, ONa, OK, OR', OCOR', OSiR'₃, Cl, Br, I, Alkyl oder NR'₂ steht, m gleich 1 oder 2 und n gleich 1, 2 oder 3 sind, mit der Maßgabe m + n = 4, wobei die Gruppe R' unabhängig Wasserstoff, lineare oder verzweigte Alkyl-, Cycloalkyl-, Alkenyl-, Cycloalkenyl-, Alkinyl-, Cycloalkinyl-, Aryl- oder Heteroarylgruppen sind, jeweils 1 bis 18 C-Atomen aufweisen und jeweils ggf. substituiert sein können. Vorzugsweise ist m gleich 1 und n gleich 3. Weiterhin bevorzugt ist Y ausgewählt aus OH oder OR', wobei OR' besonders bevorzugt ist. In diesem Falle ist R' insbesondere ausgewählt aus Methyl- oder Ethylgruppen, wobei Methylgruppen insbesondere bevorzugt sind.

Bevorzugte Aminosilane sind die ausgewählt aus der Gruppe bestehend aus 3-Aminopropyltrimethoxysilan, 3-Aminopropyltriethoxysilan, 2- Aminoethyl-3-aminopropyltrimethoxysilan, 3-Aminopropyl(diethoxymethoxysilan), 3-Aminopropyl(tripropoxysilan), 3-Aminopropyl(dipropoxymethoxysilan), 3-Aminopropyl(tridodecanoxysilan), 3-Aminopropyl(tritetradecanoxysilan), 3-Aminopropyl(trihexadecanoxysilan), 3-Aminopropyl(trioctadecanoxysilan), 3-Aminopropyl(didodecanoxy)tetradecanoxysilan, 3-Aminopropyl(dodecanoxy)- tetradecanoxy(hexadecanoxy)silan, 3-Aminopropyl(dimethoxymethylsilan), 3-Aminopropyl(methoxydimethylsilan), 3-Aminopropyl(hydroxydimethylsilan), 3-Aminopropyl(diethoxymethylsilan), 3-Aminopropyl(ethoxydimethylsilan), 3-Aminopropyl(dipropoxymethylsilan), 3-Aminopropyl(propoxydimethylsilan), 3-Aminopropyl(diisopropoxymethylsilan), 3-Aminopropyl(isopropoxydimethylsilan), 3-Aminopropyl(dibutoxymethylsilan), 3-Aminopropyl(butoxydimethylsilan), 3-Aminopropyl(disiobutoxymethylsilan), 3-Aminopropyl(isobutoxydimethylsilan), 3-Aminopropyl(didodecanoxymethylsilan), 3-Aminopropyl(dodecanoxydimethylsilan), 3-Aminopropyl(ditetradecanoxymethylsilan), 3-Aminopropyl(tetradecanoxy-dimethylsilan), 2-Aminoethyl(trimethoxysilan), 2-Aminoethyl(triethoxysilan), 2-Aminoethyl(diethoxymethoxysilan), 2-Aminoethyl(tripropoxysilan), 2-Aminoethyl(dipropoxymethoxysilan), 2-Aminoethyl(tridodecanoxysilan), 2-Aminoethyl(tritetradecanoxysilan), 2-Aminoethyl(trihexadecanoxysilan), 2-Aminoethyl(trioctadecanoxysilan), 2-Aminoethyl(didodecanoxy)tetradecanoxysilan, 2-Aminoethyl(dodecanoxy)tetradecanoxy(hexadecanoxy)silan, 2-Aminoethyl(dimethoxymethylsilan), 2-Aminoethyl(methoxydimethylsilan), 2-Aminoethyl(diethoxymethylsilan), 2-Aminoethyl(ethoxydimethylsilan), 1-Aminomethyl(trimethoxysilan), 1-Aminomethyl(triethoxysilan), 1-Aminomethyl(diethoxymethoxysilan), 1-Aminomethyl(dipropoxymethoxysilan), 1-Aminomethyl(tripropoxysilan), 1-Aminomethyl(trimethoxysilan), 1-Aminomethyl(dimethoxymethylsilan), 1-Aminomethyl(methoxydimethylsilan), 1-Aminomethyl(diethoxymethylsilan), 1-Aminomethyl(ethoxydimethylsilan), 3-Aminobutyl(trimethoxysilan), 3-Aminobutyl(triethoxysilan), 3-Aminobutyl(diethoxymethoxysilan), 3-Aminobutyl(tripropoxysilan), 3-Aminobutyl(dipropoxymethoxysilan), 3-Aminobutyl(dimethoxymethylsilan), 3-Aminobutyl(diethoxymethylsilan), 3-Aminobutyl(dimethylmethoxysilan), 3-Aminobutyl(dimethylethoxysilan), 3-Aminobutyl(tridodecanoxysilan),3-Aminobutyl(tritetradecanoxysilan), 3-Aminobutyl(trihexadecanoxysilan), 3-Aminobutyl(didodecanoxy)tetradecanoxysilan, 3-Aminobutyl(dodecanoxy)tetra-decanoxy(hexadecanoxy)silan, 3-Amino-2-methylpropyl(trimethoxysilan), 3-Amino-2-methyl-propyl(triethoxysilan), 3-Amino-2-methylpropyl(diethoxymethoxysilan), 3-Amino-2-methyl-propyl(tripropoxysilan), 3-Amino-2-methyl propyl(dipropoxymethoxysilan), 3-Amino-2-methyl-propyl(tridodecanoxysilan), 3-Amino-2-methylpropyl(tritetradecanoxysilan), 3-Amino-2-methyl-propyl(trihexadecanoxysilan), 3-Amino-2-methylpropyl(trioctadecanoxysilan), 3-Amino-2-methyl-propyl(didodecanoxy)tetradecanoxysilan, 3-Amino-2-methyl-propyl(dodecanoxy)tetradecanoxy(hexadecanoxy)silan, 3-Amino-2-methylpropyl(dimethoxymethylsilan), 3-Amino-2-methyl-propyl(methoxydimethylsilan), 3-Mercapto-2-methyl-propyl(diethoxymethylsilan), 3-Mercapto-2-methyl-propyl(ethoxydimethylsilan), 3-Mercapto-2-methyl-propyl(dipropoxymethylsilan), 3-Amino-2-methyl-propyl(propoxydimethylsilan), 3-Amino-2-methyl-propyl(diisopropoxymethylsilan), 3-Amino-2-methyl-propyl(isopropoxydimethylsilan), 3-Amino-2-methyl-propyl(dibutoxymethylsilan), 3-Amino-2-methyl-propyl(butoxydimethylsilan), 3-Amino-2-methyl-propyl(disiobutoxymethylsilan), 3-Amino-2-methyl-propyl(isobutoxydimethylsilan), 3-Amino-2-methyl-propyl(didodecanoxymethylsilan), 3-Amino-2-methyl-propyl(dodecanoxydimethylsilan), 3-Amino-2-methyl-propyl(ditetradecanoxymethylsilan) oder 3-Amino- 2-methylpropyl (tetradecanoxydimethyl-silan), triaminofunktionelles Propyltri-methoxysilan, Bis(3-trimethoxysilylpropyl)-amin, Bis(3-triethoxysilylpropyl)-amin, N-Benzyl-N-(2-aminoethyl)-3-aminopropyltrimethoxysilan-Hydrochlorid, N-Benzyl-N-(2-aminoethyl)-3-aminopropyltrimethoxysilan-Hydroacetat, N-(n-Butyl)-3-aminopropyltrimethoxysilan, 3-Aminopropylmethyldiethoxysilan, N-Vinylbenzyl-N-(2- aminoethyl)-3-aminopropylpolysiloxan und N-(2-Aminoethyl)-3-aminopropylmethyldimethoxysilan.
Bevorzugte Aminosilane oder Aminoalkylsilane sind substituierte oder unsubstituierte Aminosilan-Verbindungen, insbesondere 3-Aminopropyltrimethoxysilan, 3-Aminopropyltriethoxysilan, 3-Aminopropylmethyldiethoxysilan, N-(2-Aminoethyl)-3-aminopropyltrimethoxysilan, 2-Aminopropyl-3-aminopropyltrimethoxysilan, 2-Aminopropyl-3-aminopropyltriethoxysilan, 2-Aminoethyl-2-aminoethyl-3-aminopropyltrimethoxysilan, 2-Aminoethyl-2-aminoethyl-3-aminopropyltriethoxysilan und N-(n-Butyl)-3-aminopropyltrimethoxysilan.

Besonders bevorzugt ist das Aminosilan eines ausgewählt aus der Gruppe bestehend aus 3-Aminopropyltrimethoxysilan (DYNASYLAN® AMMO), 3-Aminopropyltriethoxysilan (DYNASYLAN® AMEO), 3-Aminopropylmethyldiethoxysilan (DYNASYLAN® 1505), N-(n-Butyl)-3-aminopropyltrimethoxysilan (DYNASYLAN® 1189) und N-(2-Aminoethyl)-3-aminopropyltrimethoxysilan (DYNASYLAN® DAMO), (H₃CO)₃Si(CH₂)₃NH(CH₂)₃Si(OCH₃)₃ (Bis-AMMO), (H₅C₂O)₃Si(CH₂)₃NH(CH₂)₃Si(OC₂H₅)₃ (Bis-AMEO), (H₃CO)₃Si(CH₂)₃NH(CH₂)₂NH(CH₂)₂NH(CH₂)₃Si(OCH₃)₃ (Bis-DAMO) (jeweils von Evonik Industries AG).

Selbstverständlich können auch Mischungen der vorab beschriebenen Bindemittel eingesetzt werden. Bevorzugte Bindemittel sind Aminosilane, Addukte aus Isocyanatoalkyl-trialkoxysilanen und Polyolen wie in EP2641925 beschrieben, Hydroxylgruppen-haltige Polyester und Polyacrylate, allein oder in Mischungen.

Die bei der erfindungsgemäßen Verwendung einzusetzenden Lacke können lösemittelfrei oder lösemittelhaltig sein. Bevorzugt sind die erfindungsgemäß einzusetzenden Lacke lösemittelfrei. Bevorzugt sind die einzusetzenden Lacke weiterhin nicht-wässrig. Nicht wässrig im Sinne der vorliegenden Erfindung bedeutet einen Gehalt an Wasser in der Zusammensetzung von nicht mehr als 1,0 Gew.-%, vorzugsweise nicht mehr als 0,5 Gew.-%, bezogen auf die Anteile aller Zusammensetzungsbestandteile. Insbesondere bevorzugt ist das eingesetzte Lacksystem frei von Wasser (maximal 500 ppm Wasser).

Die Herstellung der erfindungsgemäßen Zusammensetzungen erfolgt durch Mischung der vorab beschriebenen Komponenten. Das Mischen kann in dem Fachmann bekannten Mischern erfolgen, beispielsweise Rührbehältern, Dissolvern, Perlmühlen, Walzenstühlen, etc., aber auch kontinuierlich mittels Statikmischern oder Extrudern.

Ebenfalls Gegenstand der vorliegenden Erfindung ist die Verwendung der erfindungsgemäßen Addukte zur Herstellung flammhemmender Beschichtungen, Klebstoffe und Dichtmassen, insbesondere für alle brennbaren Formteile und Untergründe.

Ebenfalls Gegenstand der Erfindung ist die Verwendung der erfindungsgemäßen Addukte für die Beschichtung von Holz, Mitteldichte Holzfaser-Platten, Papier, Kunststoff, Textilien, Metall, Kompositen oder bereits genannten Substraten, die mit einem anderen Beschichtungsmittel beschichtet sind.

Beispiele für Kunststoffe sind Plexiglas, Polyethylen, Polycarbonat, Polypropylen, Polyester, Polyamid, Polyurethan, Polystyrol, Polyethylenterephthalat, Polysaccharide, Polymilchsäure, Polyhydroxybuttersäure und Gemische dieser Kunststoffe. Ganz besonders geeignet sind die erfindungsgemäßen Addukte bzw. Zusammensetzungen zur Beschichtung von Plexiglas. Gegenstand der Erfindung ist somit ebenfalls mit einem erfindungsgemäßen Addukt bzw. mit einer erfindungsgemäßen Zusammensetzung beschichtetes Plexiglas.

Gegenstand der vorliegenden Erfindung sind ebenfalls Metallbeschichtungszusammensetzungen, insbesondere für Automobilkarossen, Motor- und Fahrräder, Gebäudeteile und Haushaltsgeräte, welche die erfindungsgemäßen Addukte oder Zusammensetzungen umfassen.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiele:

Sofern nicht anderes angegeben, beziehen sich die Mengenangaben in Prozent in den Beispielen auf das Gewicht.

### Beispiel 1: Herstellung des erfindungsgemäßen flammhemmenden Adduktes la

In einem Dreihalskolben mit Rückflusskühler werden 62,18 g Isocyanatopropyltrimethoxysilan (NCO-Gehalt: 20,2 %), 37,81 g Exolit OP® 560 (Fa. Clariant, gemäß Strukturformel (1) mit R¹=R² = Oligoethylenglykol und R³ = CH₃, OH-Zahl: 443 mg KOH/g) und 0,01 g DBTL (Dibutylzinn(IV)-dilaurat) eingewogen und mit Stickstoff überlagert. Unter Rühren wird auf 60°C aufgeheizt und die Temperatur bei max. 60 °C gehalten. Nach ca. 3 h Reaktionszeit bei 60 °C wird ein NCO-Gehalt von <0,1 % NCO-Gehalt erreicht. Das resultierende flammhemmende Addukt Ia ist eine bei Raumtemperatur farblose, klare Flüssigkeit mit einer Viskosität (23°C) von 105 mPas.

### Vergleichsbeispiel: Herstellung des nicht-erfindungsgemäßen Adduktes Ib (gemäß Marosi et al Polymer Degradation and Stability 106 (2014) 63-73)

In einem Dreihalskolben mit Rückflusskühler werden 59,30 g Isocyanatopropyltriethoxysilan (NCO-Gehalt: 17,1 %), 30,51 g Exolit OP® 560 (Fa. Clariant, gemäß Strukturformel (1) mit R¹=R² = Oligoethylenglykol und R³ = CH₃, OH-Zahl: 443 mg KOH/g) und 0,09 g DBTL (Dibutylzinn(IV)-dilaurat) eingewogen und mit Stickstoff überlagert. Unter Rühren wird auf 60°C aufgeheizt und die Temperatur bei max. 60 °C gehalten. Nach ca. 6 h Reaktionszeit bei 60 °C wird ein NCO-Gehalt von <0,1 % NCO-Gehalt erreicht. Das resultierende Addukt Ib ist eine bei Raumtemperatur farblose, leicht trübe Flüssigkeit.

### Beispiel 2: Herstellung flammhemmender Zusammensetzungen

Gemäß den in der Tabelle 1 angegebenen Mengenteilen werden flammhemmende Zusammensetzungen hergestellt.

**Tabelle 1. Zusammensetzung der flammhemmenden Zusammensetzungen**

| | **flammhemmende Zusammensetzung IIa** | **Vergleich IIb*** |
|---|---|---|
| **Flammhemmendes Addukt Ia** | 89,6 Gew.-% | 0 Gew.-% |
| **Flammhemmendes Addukt Ib** | 0 Gew.-% | 89,6 Gew.-% |
| Tego WET 270 | 0,3 Gew.-% | 0,3 Gew.-% |
| Dynasylan AMMO | 10,0 Gew.-% | 10,0 Gew.-% |
| DBTL | 0,1 Gew.-% | 0,1 Gew.-% |

| | | |
|---|---|---|
| **nicht erfindungsgemäß* | | |

Zur Herstellung flammhemmender Zusammensetzungen wurden die Addukte Ia und Ib mit einem Aminosilan (Dynasylan AMMO) kombiniert.

Die Viskosität der Zusammensetzungen betrug, bestimmt als Auslaufzeit im DIN-4-Becher bei 23 °C, ca. 20 Sekunden.

### Ermittlung der Lackdaten und der flammhemmenden Eigenschaften

Zur Ermittlung der Kenndaten wurden alle Lacke im druckluftunterstützten Spritzauftrag mittels einer HPLV-Pistole auf phosphatierte Stahlbleche (Chemetall Gardobond 26S/60/OC) und auf Plexiglas appliziert und bei Raumtemperatur gehärtet.

**Tabelle 2: Eigenschaften der Zusammensetzungen IIa und IIb als Lack auf Stahlblechen**

| | **flammhemmende Zusammensetzung IIa** | **Vergleich IIb** |
|---|---|---|
| Pendelhärte (König) [s] Nach 1 Tag bei RT | 41 nicht klebrig | Nicht meßbar* klebrig |

| | | |
|---|---|---|
| *Prüfstempel zerstört den Lack. | | |

Die Ergebnisse in Tabelle 2 zeigen, dass der aus der erfindungsgemäßen flammhemmenden Zusammensetzung IIa hergestellte Klarlack nach eintägiger Lagerung bei Raumtemperatur nicht klebrig ist und eine Pendelhärte [König] von 41 s besitzt. Die Zusammensetzung gemäß Vergleichsbeispiel IIb dagegen ist nach Raumtemperatur-Härtung zu klebrig, um vermessen werden zu können. Somit kann für die Zusammensetzung IIb bei niedrigen Aushärtetemperaturen, anders als für die erfindungsgemäße flammhemmende Zusammensetzung IIa, kein trockener, stapelbarer Klarlack erhalten werden.

Die erfindungsgemäße flammhemmende Zusammensetzung IIa wurde weiterhin auf Plexiglas appliziert und dem Kleinbrennertest (DIN-EN 13501, Baustoffklasse D) unterzogen. Der Kleinbrennertest zeigte, dass der aus der erfindungsgemäßen flammhemmenden Zusammensetzung IIa hergestellte Klarlack flammhemmende Eigenschaften besitzt und den Brandtest nach Baustoffklasse D erfülllt.

## Patentansprüche

1. Addukt aus mindestens einem Isocyanatoalkyltrimethoxysilan und mindestens einem mit dem Isocyanatoalkyltrimethoxysilan reaktiven Flammschutzmittel, wobei das reaktive Flammschutzmittel ein Phosphonat oder Phosphinoxid mit im Mittel 1,5 bis 3,0 zerewitinoffaktiven Wasserstoffatomen und einem zahlenmittleren Molekulargewicht Mₙ von 60 bis 10000 Dalton ist.

2. Addukt nach Anspruch 1,
**dadurch gekennzeichnet,**
**dass** das Isocyanatoalkyltrimethoxysilan ausgewählt wird aus der Gruppe bestehend aus Isocyanatomethyltrimethoxysilan, 2-Isocyanatoethyltrimethoxysilan, 3-Isocyanato-n-propyltrimethoxysilan und 4-Isocyanato-n-butyltrimethoxysilan.

3. Addukt nach Anspruch 2,
**dadurch gekennzeichnet,**
**dass** das Isocyanatoalkyltrimethoxysilan 3-Isocyanato-n-propyltrimethoxysilan ist.

4. Addukt nach einem der vorhergehenden Ansprüche,
**dadurch gekennzeichnet,**
**dass** die phosphororganische Verbindung die Strukturformel 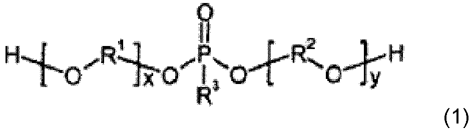 mit
R¹, R² = verzweigter oder unverzweigter Alkylenrest mit 1 bis 24 C-Atomen, substituierter oder nicht-substituierter Arylenrest mit 6 bis 20 C-Atomen, substituierter oder nicht-substituierter Aralkylenrest mit 6 bis 30 C-Atomen, substituierter oder nicht-substituierter Alkarylenrest mit 6 bis 30 C-Atomen, wobei R¹ und R² gleich oder verschieden sein können, R³ = H, verzweigter oder unverzweigter Alkylrest mit 1 bis 24 C-Atomen, substituierter oder nicht-substituierter Arylrest mit 6 bis 20 C-Atomen, substituierter oder nicht-substituierter Aralkylrest mit 6 bis 30 C-Atomen, substituierter oder nicht-substituierter Alkarylrest mit 6 bis 30 C-Atomen,
x = 1 - 50 und
y = 1 - 50
aufweist.

5. Addukt nach einem der Ansprüche 1 - 3,
**dadurch gekennzeichnet,**
**dass** die phosphororganische Verbindung die Strukturformel 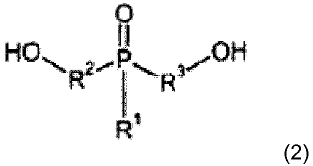 mit
R¹ = H, verzweigter oder unverzweigter Alkylrest mit 1 bis 24 C-Atomen, substituierter oder nicht-substituierter Arylrest mit 6 bis 20 C-Atomen, substituierter oder nicht-substituierter Aralkylrest mit 6 bis 30 C-Atomen, substituierter oder nicht-substituierter Alkarylrest mit 6 bis 30 C-Atomen,
R², R³ = verzweigter oder unverzweigter Alkylenrest mit 1 bis 24 C-Atomen, substituierter oder nicht-substituierter Arylenrest mit 6 bis 20 C-Atomen, substituierter oder nicht-substituierter Aralkylenrest mit 6 bis 30 C-Atomen, substituierter oder nicht-substituierter Alkarylenrest mit 6 bis 30 C-Atomen, wobei die Alkyl- oder Arylreste auch Hydroxyl-, Amino- und/oder Thiolgruppen-substituiert und die Reste R² und R³ gleich oder verschieden sein können, aufweist.

6. Addukt nach einem der Ansprüchech 1-3,
**dadurch gekennzeichnet,**
**dass** die mindestens eine phosphor-organische Verbindung Diethyl-N,N-bis-(2-hydroxyethyl)-aminomethylphosphonat ist..

7. Addukt nach einem der vorhergehenden Ansprüche,
**dadurch gekennzeichnet,**
**dass** es ein 1:1-Addukt ist.

8. Verfahren zur Herstellung eines Adduktes nach einem der Ansprüche 1 - 7,
**dadurch gekennzeichnet,**
**dass** mindestens eine Isocyanatoalkyltrimethoxysilan mit mindestens einem mit dem Isocyanatoalkyltrimethoxysilan reaktiven Flammschutzmittel umgesetzt wird, wobei das reaktive Flammschutzmittel ein Phosphonat oder Phosphinoxid mit im Mittel 1,5 bis 3,0 zerewitinoffaktiven Wasserstoffatomen und einem zahlenmittleren Molekulargewicht Mₙ von 60 bis 10000 Dalton ist.

9. Verfahren nach Anspruch 8,
**dadurch gekennzeichnet,**
**dass** das mindestens eine Isocyanatoalkyltrimethoxysilan mit mindestens einem mit dem Isocyanatoalkyltrimethoxysilan reaktiven Flammschutzmittel in einem Verhältnis von NCO-reaktiven Resten der bzw. der Flammschutzmittel zu NCO-Resten des bzw. der Isocyanatoalkyltrimethoxysilane von 0,8:1 bis 1,2:1 eingesetzt wird.

10. Zusammensetzung umfassend mindestens ein Addukt nach einem der Ansprüche 1 - 7.

11. Zusammensetzung nach Anspruch 10,
**dadurch gekennzeichnet,**
**dass** sie mindestens einen Katalysator in Anteilen von 0,01 - 4 Gew.-% bezogen auf die Gesamtmasse der Zusammensetzung aufweist.

12. Zusammensetzung nach Anspruch 10 oder 11,
**dadurch gekennzeichnet,**
**dass** sie mindestens ein Co-Bindemittel in Anteilen von 0,1 - 30 Gew.-% bezogen auf die Gesamtmasse der Zusammensetzung aufweist.

13. Zusammensetzung nach Anspruch 12,
**dadurch gekennzeichnet,**
**dass** das Co-Bindemittel ein Trialkoxysilan-funktionelles Aminosilan ist.

14. Verwendung mindestens eines Adduktes nach einem der Ansprüche 1 - 7 oder mindestens einer Zusammensetzung nach einem der Ansprüche 10 - 13 zur Herstellung flammhemmender Beschichtungen, Klebstoffe und Dichtmassen.

15. Plexiglas, beschichtet mit einem Addukt nach einem der Ansprüche 1 - 7 oder einer Zusammensetzung nach einem der Ansprüche 10 - 13.

## Claims

1. Adduct of at least one isocyanatoalkyltrimethoxysilane with at least one flame retardant reactive with the isocyanatoalkyltrimethoxysilane, wherein the reactive flame retardant is a phosphonate or phosphine oxide having on average 1.5 to 3.0 Zerewitinoff-active hydrogen atoms and a number-average molecular weight Mₙ of 60 to 10 000 Daltons.

2. Adduct according to Claim 1,
**characterized in that**
the isocyanatoalkyltrimethoxysilane is selected from the group consisting of isocyanatomethyltrimethoxysilane, 2-isocyanatoethyltrimethoxysilane, 3-isocyanato-n-propyltrimethoxysilane and 4-isocyanato-n-butyltrimethoxysilane.

3. Adduct according to Claim 2,
**characterized in that**
the isocyanatoalkyltrimethoxysilane is 3-isocyanato-n-propyltrimethoxysilane.

4. Adduct according to any of the preceding claims,
**characterized in that**
the organophosphorus compound has the structural formula 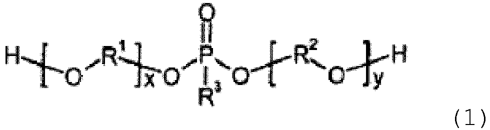 where
R¹, R² = branched or unbranched alkylene radical having 1 to 24 carbon atoms, substituted or unsubstituted arylene radical having 6 to 20 carbon atoms, substituted or unsubstituted aralkylene radical having 6 to 30 carbon atoms, substituted or unsubstituted alkarylene radical having 6 to 30 carbon atoms, wherein R¹ and R² may be identical or different,
R³ = H, branched or unbranched alkyl radical having 1 to 24 carbon atoms, substituted or unsubstituted aryl radical having 6 to 20 carbon atoms, substituted or unsubstituted aralkyl radical having 6 to 30 carbon atoms, substituted or unsubstituted alkaryl radical having 6 to 30 carbon atoms,
x = 1 - 50 and
y = 1 - 50.

5. Adduct according to any of Claims 1 - 3,
**characterized in that**
the organophosphorus compound has the structural formula 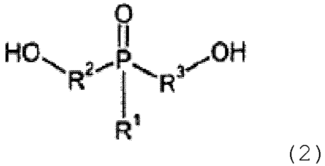 where
R¹ = H, branched or unbranched alkyl radical having 1 to 24 carbon atoms, substituted or unsubstituted aryl radical having 6 to 20 carbon atoms, substituted or unsubstituted aralkyl radical having 6 to 30 carbon atoms, substituted or unsubstituted alkaryl radical having 6 to 30 carbon atoms,
R², R³ = branched or unbranched alkylene radical having 1 to 24 carbon atoms, substituted or unsubstituted arylene radical having 6 to 20 carbon atoms, substituted or unsubstituted aralkylene radical having 6 to 30 carbon atoms, substituted or unsubstituted alkarylene radical having 6 to 30 carbon atoms, wherein the alkyl or aryl radicals may also be substituted with hydroxyl groups, amino groups and/or thiol groups and the radicals R² and R³ may be identical or different.

6. Adduct according to any of Claims 1 - 3,
**characterized in that**
the at least one organophosphorus compound is diethyl-N,N-bis(2-hydroxyethyl)aminomethyl phosphonate.

7. Adduct according to any of the preceding claims,
**characterized in that**
it is a 1:1 adduct.

8. Method of preparing an adduct according to any of Claims 1 - 7,
**characterized in that**
it comprises reacting at least one isocyanatoalkyltrimethoxysilane with at least one flame retardant reactive with the isocyanatoalkyltrimethoxysilane, wherein the reactive flame retardant is a phosphonate or phosphine oxide having on average 1.5 to 3.0 Zerewitinoff-active hydrogen atoms and a number-average molecular weight Mₙ of 60 to 10 000 Daltons.

9. Method according to Claim 8,
**characterized in that**
the at least one isocyanatoalkyltrimethoxysilane is employed with at least one flame retardant reactive with the isocyanatoalkyltrimethoxysilane in a ratio of NCO-reactive radicals of the flame retardant(s) to NCO radicals of the isocyanatoalkyltrimethoxysilane(s) of 0.8:1 to 1.2:1.

10. Composition comprising at least one adduct according to any of Claims 1 - 7.

11. Composition according to Claim 10,
**characterized in that**
it comprises at least one catalyst in proportions of 0.01 - 4 wt% based on the total mass of the composition.

12. Composition according to either of Claims 10 to 11,
**characterized in that**
it comprises at least one cobinder in proportions of 0.1 - 30 wt% based on the total mass of the composition.

13. Composition according to Claim 12,
**characterized in that**
the cobinder is a trialkoxysilane-functional aminosilane.

14. Use of at least one adduct according to any of Claims 1 - 7 or at least one composition according to any of Claims 10 - 13 for preparing flame retardant coatings, adhesives and sealing compounds.

15. Plexiglass coated with an adduct according to any of Claims 1 - 7 or a composition according to any of Claims 10 - 13.

## Revendications

1. Produit d'addition d'au moins un isocyanatoalkyltriméthoxysilane et d'au moins un agent ignifuge réactif avec l'isocyanatoalkyltriméthoxysilane, l'agent ignifuge réactif étant un phosphonate ou un oxyde de phosphine présentant en moyenne 1,5 à 3,0 atomes d'hydrogène à activité de zéréwitinoff et un poids moléculaire moyen en nombre Mn de 60 à 10.000 daltons.

2. Produit d'addition selon la revendication 1, **caractérisé en ce que** l'isocyanatoalkyltriméthoxysilane est choisi dans le groupe constitué par l'isocyanatométhyltriméthoxysilane, le 2-isocyanatoéthyltriméthoxysilane, le 3-isocyanato-n-propyltriméthoxysilane et le 4-isocyanato-n-butyltriméthoxysilane.

3. Produit d'addition selon la revendication 2, **caractérisé en ce que** l'isocyanatoalkyltriméthoxysilane est le 3-isocyanato-n-propyltriméthoxysilane.

4. Produit d'addition selon l'une quelconque des revendications précédentes, **caractérisé en ce que** le composé organique du phosphore présente la formule de structure 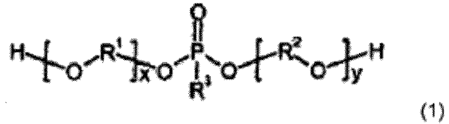 dans laquelle
R¹, R² = radical alkylène ramifié ou non ramifié comprenant 1 à 24 atomes de carbone, radical arylène substitué ou non substitué comprenant 6 à 20 atomes de carbone, radical aralkylène substitué ou non substitué comprenant 6 à 30 atomes de carbone, radical alkarylène substitué ou non substitué comprenant 6 à 30 atomes de carbone, R¹ et R² pouvant être identiques ou différents,
R³ = H, radical alkyle ramifié ou non ramifié comprenant 1 à 24 atomes de carbone, radical aryle substitué ou non substitué comprenant 6 à 20 atomes de carbone, radical aralkyle substitué ou non substitué comprenant 6 à 30 atomes de carbone, radical alkaryle substitué ou non substitué comprenant 6 à 30 atomes de carbone,
x = 1-50 et
y = 1-50.

5. Produit d'addition selon l'une quelconque des revendications 1-3, **caractérisé en ce que** le composé organique du phosphore présente la formule de structure 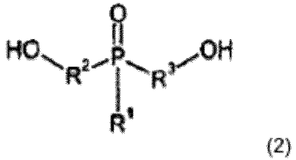 où
R¹ = H, radical alkyle ramifié ou non ramifié comprenant 1 à 24 atomes de carbone, radical aryle substitué ou non substitué comprenant 6 à 20 atomes de carbone, radical aralkyle substitué ou non substitué comprenant 6 à 30 atomes de carbone, radical alkaryle substitué ou non substitué comprenant 6 à 30 atomes de carbone,
R², R³ = radical alkylène ramifié ou non ramifié comprenant 1 à 24 atomes de carbone, radical arylène substitué ou non substitué comprenant 6 à 20 atomes de carbone, radical aralkylène substitué ou non substitué comprenant 6 à 30 atomes de carbone, radical alkarylène substitué ou non substitué comprenant 6 à 30 atomes de carbone, les radicaux alkyle ou aryle pouvant également être substitués par des groupes hydroxyle, amino et/ou thiol et les radicaux R² et R³ pouvant être identiques ou différents.

6. Produit d'addition selon l'une quelconque des revendications 1-3, **caractérisé en ce que** ledit au moins un composé organique du phosphore est le N,N-bis-(2-hydroxyéthyl)-aminométhylphosphonate de diéthyle.

7. Produit d'addition selon l'une quelconque des revendications précédentes, **caractérisé en ce qu'**il s'agit d'un produit d'addition 1:1.

8. Procédé pour la préparation d'un produit d'addition selon l'une quelconque des revendications 1-7, **caractérisé en ce qu'**on transforme au moins un isocyanatoalkyltriméthoxysilane avec au moins un agent ignifuge réactif avec l'isocyanatoalkyltriméthoxysilane, l'agent ignifuge réactif étant un phosphonate ou un oxyde de phosphine présentant en moyenne 1,5 à 3,0 atomes d'hydrogène à activité de zéréwitinoff et un poids moléculaire moyen en nombre Mₙ de 60 à 10.000 daltons.

9. Procédé selon la revendication 8, **caractérisé en ce que** ledit au moins un isocyanatoalkyltriméthoxysilane est utilisé avec au moins un agent ignifuge réactif avec l'isocyanatoalkyltriméthoxysilane dans un rapport des radicaux réactifs avec NCO du ou des agents ignifuges aux radicaux NCO du ou des isocyanatoalkyltriméthoxysilanes de 0,8:1 à 1,2:1.

10. Composition comprenant au moins un produit d'addition selon l'une quelconque des revendications 1-7 .

11. Composition selon la revendication 10, **caractérisée en ce qu'**elle présente au moins un catalyseur en des proportions de 0,01-4% en poids par rapport à la masse totale de la composition.

12. Composition selon la revendication 10 ou 11, **caractérisée en ce qu'**elle présente au moins un co-liant en des proportions de 0,1-30% en poids par rapport à la masse totale de la composition.

13. Composition selon la revendication 12, **caractérisée en ce que** le co-liant est un aminosilane à fonctionnalité trialcoxysilane.

14. Utilisation d'au moins un produit d'addition selon l'une quelconque des revendications 1-7 ou d'au moins une composition selon l'une quelconque des revendications 10-13 pour la préparation de revêtements, d'adhésifs et de masses d'étanchéité ignifuges.

15. Plexiglas revêtu par un produit d'addition selon l'une quelconque des revendications 1-7 ou par une composition selon l'une quelconque des revendications 10-13.
